Europäisches Patentamt

(19) European Patent Office

Office européen des brevets

(11) Numéro de publication: **0 099 803**
**B1**

(12) **FASCICULE DE BREVET EUROPEEN**

(45) Date de publication du fascicule du brevet:
11.06.86

(21) Numéro de dépôt: 83401387.2

(22) Date de dépôt: 06.07.83

(51) Int. Cl.⁴: **H 02 P 5/40, H 02 P 9/46, H 02 K 17/30**

(54) **Dispositif électrotechnique pour la régulation des machines tournantes asynchrones.**

(30) Priorité: 16.07.82 FR 8212443

(43) Date de publication de la demande:
01.02.84 Bulletin 84/5

(45) Mention de la délivrance du brevet:
11.06.86 Bulletin 86/24

(84) Etats contractants désignés:
**BE DE FR GB IT NL SE**

(56) Documents cités:
**EP - A - 0 015 624**
**CH - A - 553 504**
**DE - A - 2 353 191**
**DE - C - 845 979**
**FR - A - 2 319 234**

(73) Titulaire: **MOTEURS LEROY-SOMER (Société Anonyme française), Bld. Marcellin-Leroy, F-16015 Angouleme Cedex (FR)**

(72) Inventeur: **Renard, Michel, Cidex 482 - Rue de Belfond, F-16690 Fleac (FR)**

(74) Mandataire: **Bouju, André, Cabinet Bouju 38 avenue de la Grande Armée, F-75017 Paris (FR)**

LIBER, STOCKHOLM 1986

# Description

La présente invention concerne un dispositif de régulation des machines tournantes asynchrones, notamment des moteurs et des génératrices asynchrones.

Dans certaines applications électrotechniques, les moteurs sont alimentés par une tension fixe et par un convertisseur de fréquence variable.

Dans ce cas, comme la tension reste constante, lorsque la fréquence augmente, on obtient une désaturation du moteur qui entraîne une diminution de son couple.

Or, dans de nombreuses applications, on souhaite au contraire que le couple du moteur augmente avec la fréquence, ou au moins reste constant.

Une des solutions actuellement retenues pour atteindre cet objectif consiste à réaliser au moyen d'un dispositif électronique, un découpage haute fréquence du signal continu de la tension d'alimentation du moteur et à remoduler, à partir de ce découpage, un nouveau signal de façon à obtenir un rapport sensiblement constant en fonction de la vitesse de rotation du moteur.

Cependant ces dispositifs électroniques présentent les inconvénients d'être très complexes, donc coûteux et d'engendrer des bruits et des vibrations du moteur à basse fréquence.

Par ailleurs on connaît, notamment d'après le document FR 2.319.234 des moteurs asynchrones dans lesquels des condensateurs sont disposés en série avec les bobinages du moteur et ont une capacité telle que le facteur capacitif est supérieur au facteur inductif correspondant au bobinage associé. Cette disposition a principalement pour but de protéger les bobinages contre une surintensité.

Un but de la présente invention est de proposer un dispositif électrotechnique de régulation de réalisation très simple et donc peu coûteuse qui permette néanmoins de contrôler la vitesse d'un moteur asynchrone alimenté à fréquence fixe et soumis à un couple résistant.

En vue de la réalisation de ce but, on prévoit selon l'invention un dispositif électrotechnique de régulation des machines tournantes asynchrones, comprenant des condensateurs en série avec les bobinages de la machine tournante, la capacité des condensateurs associés à chacun des bobinages étant telle que le facteur capacitif

est supérieur au facteur inductif Lw correspondant au bobinage, caractérisé en ce qu'il comprend un court-circuiteur à impédance variable branché en parallèle entre l'un au moins des bobinages et le ou les condensateurs associés. Ainsi, le but recherché est atteint sans engendrer les bruits et vibrations des dispositifs antérieurs.

Le dispositif conforme à l'invention peut également être appliqué à la régulation de la tension des génératrices asynchrones, tournant à vitesse fixe ou variable.

Un tel dispositif comprend, comme dans le cas des moteurs asynchrones, un court-circuiteur à impédance variable branché en parallèle entre les bobinages de la génératrice et les condensateurs branchés en série avec ceux-ci.

Selon une autre version de l'invention, appliquée à un moteur asynchrone triphasé, le court-circuiteur est un thyristor branché en parallèle aux bornes du bobinage de l'une des phases du moteur.

Grâce à cette disposition, on peut faire disparaître complètement ou partiellement une alternance de la tension que alimente la phase en question du moteur. Il aparaît dans le bonage de cette phase une composante à courant continu qui se comporte en frein vis-à-vis du moteur.

En agissant simplement sur le réglage du thyristor, on peut ainsi régler efficacement la vitesse du moteur.

Selon une autre version de l'invention, également appliquée à un moteur asynchrone triphasé, le courtcircuiteur est constitué par trois thyristors branchés en parallèle aux bornes des bobinages correspondant aux trois phases du moteur.

On peut ainsi augmenter l'efficacité du freinage précité, sans provoquer de déséquilibre.

Pour éliminer les phénomènes transitoires nuisibles, il est avantageux dans les deux versions précitées de brancher une self en série avec les thyristors.

L'invention peut également s'appliquer à un moteur monophasé comportant des bobinages en étoile ou en triangle, le court-circuiteur étant branché en parallèle aux bornes d'un bobinage.

D'autres particularités et avantages de l'invention apparaîtront encore dans la description ci-après.

Aux dessins annexés, donnés à titre d'exemples non limitatifs :

– la figure 1 est le schéma électrique d'un premier dispositif conforme à l'invention, équipant un moteur asynchrone ;

– les figures 2 et 3 sont deux graphiques montrant la variation de l'impédance quand la fréquence double, dans le cas d'un moteur non équipé du dispositif selon la figure 1 ;

– les figures 4 et 5 sont deux graphiques analogues à ceux des figures 2 et 3, dans le cas d'un moteur équipé du dispositif selon la figure 1 ;

– la figure 6 est un graphique montrant

1/ pour un moteur non équipé du dispositif conforme à l'invention l'évolution du couple en fonction de la vitesse (a), l'évolution de l'intensité en fonction de la vitesse (b) ;

2/ pour un moteur équipé du dispositif conforme à l'invention, l'évolution du couple en fonction de la vitesse (c), l'évolution de l'intensité en fonction de la vitesse (d). Sur cette figure, 10 est l'intensité à vide et $I_D$ l'intensité de démarrage.

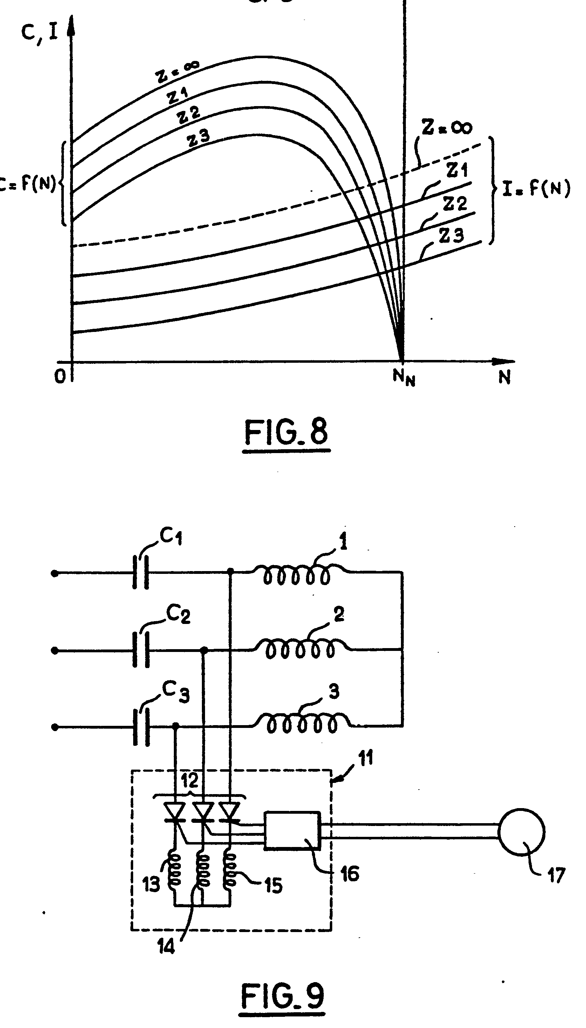

– la figure 7 est le schéma électrique d'un second dispositif conforme à l'invention équipant un moteur asynchrone ;

– la figure 8 est une courbe montrant l'évolution de l'intensité et du couple en fonction de la vitesse dans le cas d'un moteur équipé d'un dispositif conforme à la figure 7 pour différentes valeurs de l'impédance court-circuiteuse (9),

– la figure 9 est le schéma électrique d'un troisième dispositif conforme à l'invention, équipant un moteur asynchrone ;

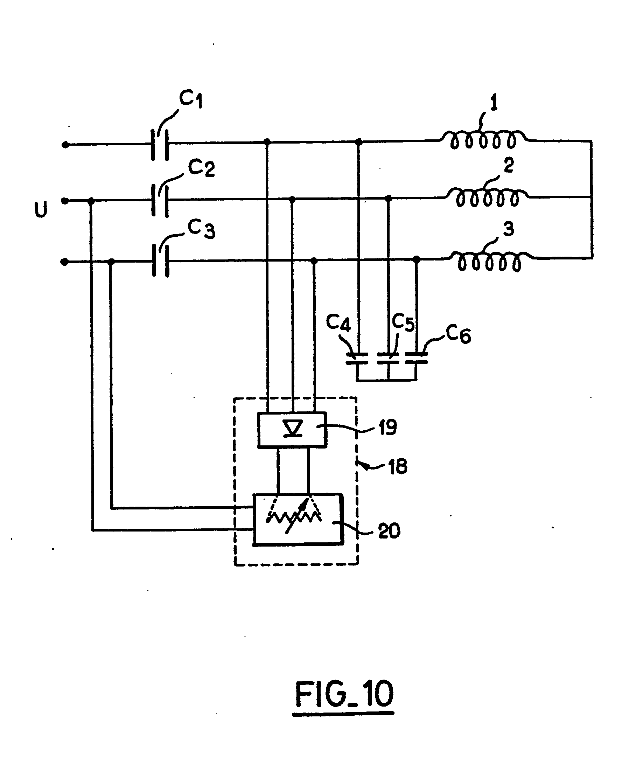

  – la figure 10 est le schéma électrique d'un dispositif conforme à l'invention, équipant une génératrice asynchrone.

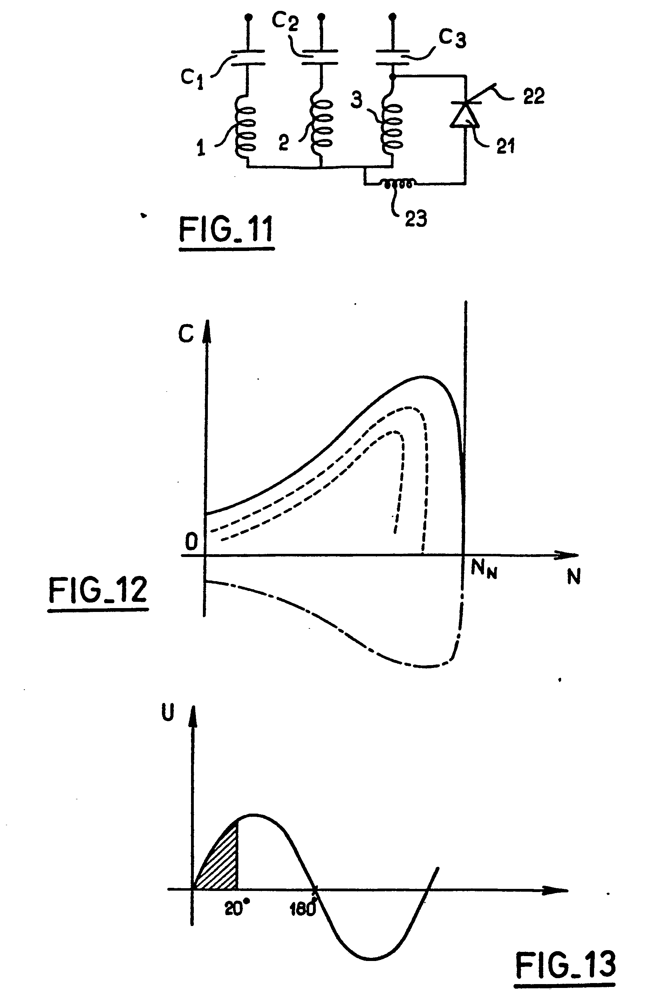

  – la figure 11 est le schéma électrique d'une autre version d'un dispositif selon l'invention, équipant un moteur asynchrone triphasé,

  – la figure 12 est un graphique montrant pour un moteur équipé du dispositif selon la figure 11 l'évolution du couple en fonction de la vitesse,

  – la figure 13 est un graphique représentant une sinusoïde de la tension appliquée à l'une des phases du moteur et l'effet du thyristor,

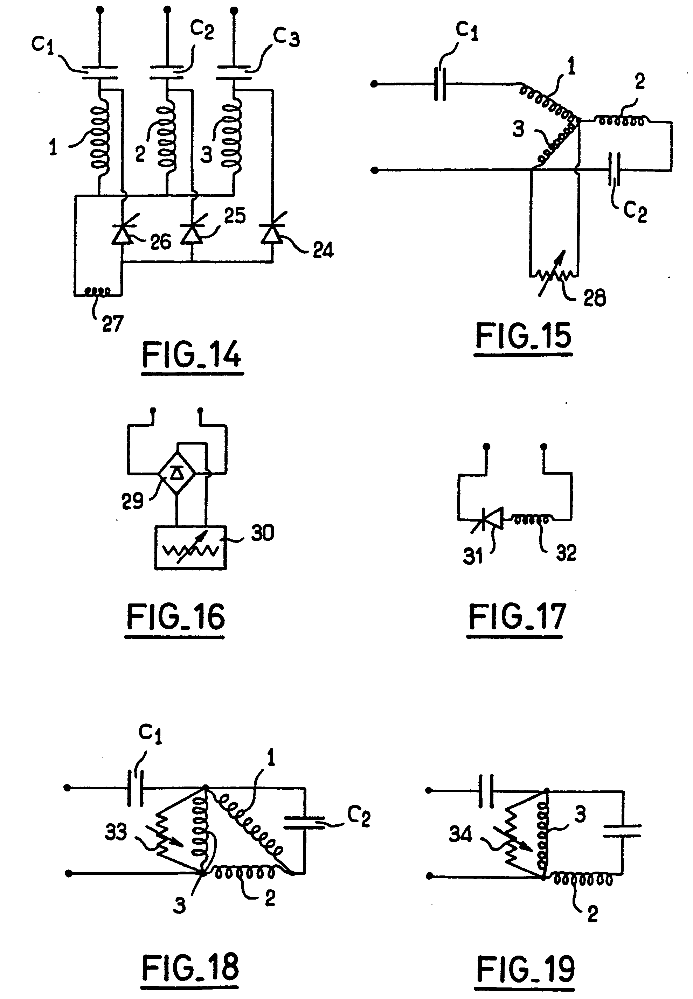

  – la figure 14 est le schéma électrique d'une version modifiée du dispositif selon l'invention, comprenant trois thyristors en parallèle avec les bobinages des trois phases,

  – la figure 15 est le schéma d'un dispositif équipant un moteur asynchrone monophasé, en étoile,

  – la figure 16 est le schéma d'un courtcircuiteur pouvant équiper le dispositif selon la figure 15,

  – la figure 17 est le schéma d'un autre courtcircuiteur pouvant équiper le dispositif selon la figure 15,

  – la figure 18 est le schéma d'un dispositif équipant un moteur asynchrone monophasé en triangle,

  – la figure 19 est le schéma d'un dispositif équipant un moteur asynchrone monophasé vrai.

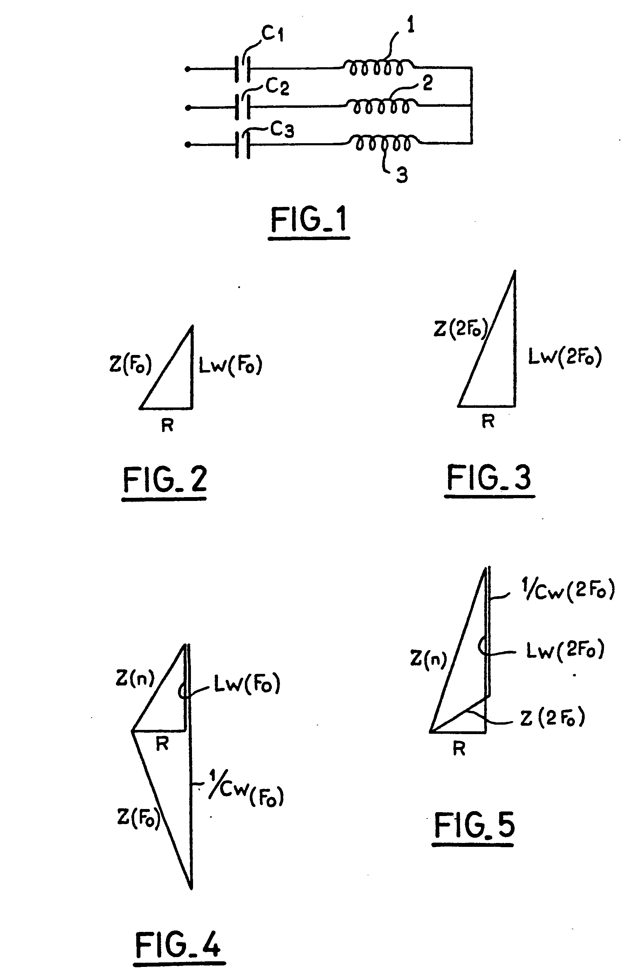

Sur la figure 1, on a représenté les trois bobinages 1, 2, 3 d'un moteur asynchrone triphasé. Ces trois bobinages 1, 2, 3 peuvent être branchés en étoile ou en triangle.

On supposera que ce moteur asynchrone est alimenté par une tension continue fixe et qu'il est associé à un convertisseur de fréquence, permettant de faire varier la vitesse de rotation du moteur.

Dans cet exemple, le dispositif de régulation comprend des condensateurs $C_1$, $C_2$, $C_3$ branchés en série respectivement aux bornes des bobinages 1, 2, 3.

En l'absence de ces trois capacités $C_1$, $C_2$, $C_3$ lorsque la fréquence passe d'une valeur $F_o$ à une valeur double $2F_o$ (voir figures 2 et 3), l'inductance $Lw$ du circuit (celle des bobinages 1, 2, 3) passe d'une valeur $Lw$ ($F_o$) à une valeur double $Lw$ ($2F_o$), puisque la pulsation $w$ est proportionnelle à la fréquence $w = 2 \pi F$.

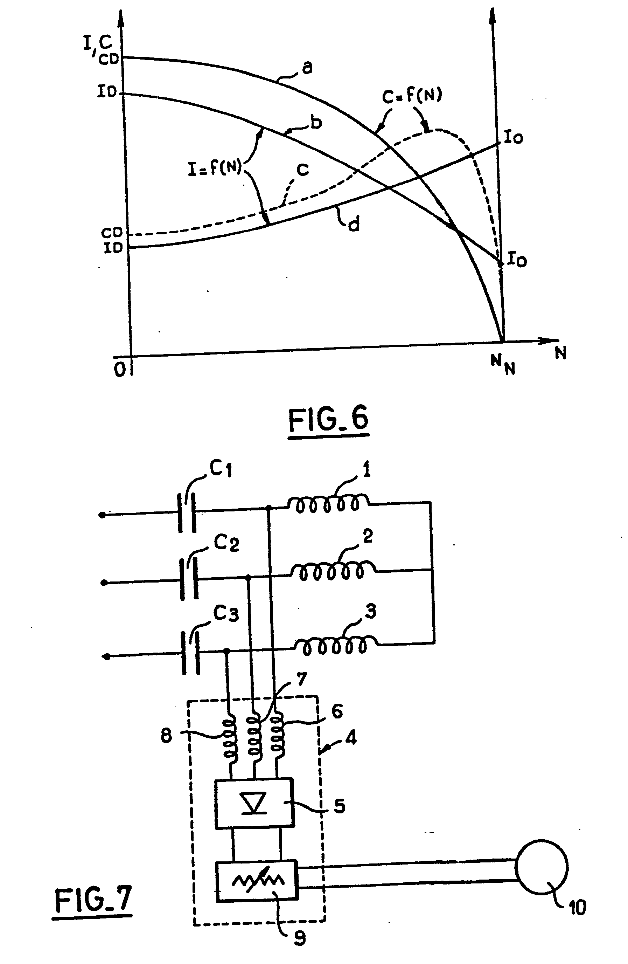

De même l'impédance $Z$ ($F_o$) croît jusqu'à $Z$ ($2F_o$). L'intensité I du courant décroît entre une valeur égale à     et une valeur     . Du fait que l'impédance a fortement augmenté, l'intensité diminue rapidement en fonction de l'augmentation de la fréquence, c'est-à-dire de la vitesse N du moteur, comme on le voit sur les courbes *a* et *b* de la figure 6. Le système se trouve limité car le couple moteur régresse alors que le couple résistant progresse.

L'effet technique du dispositif de régulation conforme à l'invention est le suivant (voir figures 4 et 5).

Lorsque la fréquence varie entre les valeurs $F_o$ et $2F_o$ le facteur inductif $Lw$ de l'impédance, passe d'une valeur $Lw$ ($F_o$) (figure 4) à une valeur double $Lw$ ($2F_o$) comme indiqué sur la figure 5.

Par contre, le facteur capacitif passe d'une valeur égale à     à une valeur plus faible     . Les graphiques des figures 4 et 5 montrent par ailleurs que l'impédance Z diminue. Le courant I augmente d'une valeur égale à     à une valeur égale à     . Ainsi, les condensateurs $C_1$, $C_2$, $C_3$ ont pour effet de compenser le facteur inductif $Lw$ par un facteur capacitif     de signe opposé.

On constate donc que lorsque le facteur est supérieur au facteur $Lw$, ce qui est le cas des figures 4 et 5, l'intensité croît en fonction de la fréquence, c'est-à-dire de la vitesse N, comme le montre la courbe *d* de la figure 6, contrairement à ce que l'on observe en l'absence des condensateurs $C_1$, $C_2$, $C_3$ (courbes *a* et *b*).

En même temps, le couple C croît en fonction de la vitesse N (voir courbe *c*) de la figure 6.

On comprend que, par le choix judicieux de la capacité des condensateurs $C_1$, $C_2$, $C_3$ on peut obtenir que le couple du moteur soit constant, ou que ce couple augmente en fonction de la vitesse.

L'expérience a montré que d'excellents résultats sont obtenus lorsque la capacité des condensateurs $C_1$, $C_2$, $C_3$ est choisie de façon que le facteur soit égal environ au double du facteur $Lw$, lorque le moteur tourne à vide.

Le dispositif conforme à l'invention tel que représenté sur la figure 1 permet donc d'obtenir, d'une manière simple, que le couple d'un moteur asynchrone alimenté en tension fixe et fréquence variable, augmente ou reste constant en fonction de la vitesse.

La forme naturelle des moteurs destinés à être dotés d'un dispositif conforme à l'invention doit être cependant adaptée.

De plus, le dispositif de régulation conforme à l'invention présente l'avantage de limiter l'intensité I du moteur, notamment au démarrage, de sorte que ce moteur est préservé contre les risques de détérioration par surchauffe notamment à bas régime.

Par ailleurs, le dispositif conforme à l'invention contrairement auxdispositifs de régulation électronique connus, n'engendre aucun bruit ni vibration anormaux lors du fonctionnement du moteur, même à basse fréquence.

En outre, le dispositif selon l'invention présente l'avantage de consommer très peu d'énergie.

On donne ci-après, à titre d'exemple non limitatif, les caractéristiques d'un dispositif de régulation conforme à l'invention, dont le schéma répond à celui de la figure 1.

Puissance du moteur: 500 à 1200W.

Tension d'alimentation: 20V.

Fréquence: 54Hz à 87Hz

Cos φ à 54Hz: 0,8 avant

Rendement à 54Hz: 0,7

Cos φ à 87Hz: 0,78 avant

Rendement à 87Hz: 0,75

A titre de comparaison, dans le cas d'un dispositif répondant aux caractéristiques précitées, mais dépourvu de moyens de compensation, d'est-à-dire sans condensateur en série avec les bobinages, on obtient :

    Cos φ à 54Hz: 0,45 arrière
    Rendement à 54Hz: 0,51
    (Moteur sursaturé)
    Cos φ à 87Hz: 0,86 arrière
    Rendement à 87Hz: 0,55
    (Moteur désaturé)

On constate donc que les valeurs du cos φ et du rendement sont plus favorables dans le cas du dispositif conforme à l'invention, à la fois à basse fréquence et à haute fréquence.

Sur le schéma de la figure 7, on retrouve les trois bobinages 1, 2, 3 d'un moteur asynchrone et les trois condensateurs $C_1$, $C_2$, $C_3$ branchés en série avec ces bobinages, comme dans le cas du dispositif selon la figure 1.

Le dispositif représenté sur cette figure 7 comprend en outre un court-circuiteur 4 à impédance variable branché en parallèle entre les bobinages 1, 2, 3 et les condensateurs $C_1$, $C_2$, $C_3$ en série.

Dans l'exemple de la figure 7 qui est appliqué au cas d'un moteur de puissance inférieure ou égale à environ 10KW, le court-circuiteur 4 comprend un pont redresseur à diodes 5 dont les bornes sont chacune reliées en parallèle à une borne des bobinages 1, 2, 3, par l'intermédiaire d'une self 6, 7, 8 ou d'un bobinage auxiliaire.

Le pont redresseur à diode 5 est également relié à une résistance variable 9 qui permet de faire varier l'impédance du court-circuiteur 4.

Cette impédance variable 9 peut être commandée manuellement ou automatiquement au moyen d'un régulateur asservi à un organe de détection 10 prenant en compte par exemple la vitesse, ou le débit d'une pompe ou d'un ventilateur, ou encore la température d'une enceinte.

Sur la figure 8, on a représenté l'évolution de l'intensité I et du couple moteur C en fonction de l'impédance du court-circuiteur du moteur. La courbe en pointillés représente le cas où le court-circuiteur 4 aurait une impédance infinie ou serait inexistante, ce qui ramène le dispositif au cas de celui représenté sur la figure 1.

Les trois courbes en traits pleins représentent l'évolution de l'intensité I du couple moteur C pour trois valeurs différentes de l'impédance $Z_1$, $Z_2$, $Z_3$ du court-circuiteur 4. Quelle que soit cette impédance, l'intensité I croît avec la vitesse de sorte que, comme dans le cas du dispositif selon la figure 1, le couple du moteur augmente avec sa vitesse.

On comprend qu'en faisant varier l'impédance du court-circuiteur 4, on modifie l'intensité I et le couple du moteur.

De même, lorsque le moteur asynchrone est alimenté à une tension et à une fréquence fixe, on peut régler sa vitesse en modifiant la valeur de l'impédance (4).

Dans le cas où la variation de l'impédance est commandée automatiquement par l'organe de détection 10, cette impédance 4 agit en un véritable régulateur électronique de construction très simple qui asservit la vitesse du moteur à un paramètre déterminé tel que la vitesse ou le débit d'une pompe ou d'un ventilateur, ou la température d'une enceinte.

Comme dans le cas du dispositif selon la figure celui représenté sur la figure 7 protège le moteur contre les risques de surchauffe du fait que l'intensité est maintenue à une valeur acceptable dans toutes les circonstances, notamment en cas de surcharge.

La figure 9 représente un dispositif analogue à celui de la figure 7, mais mieux adapté aux moteurs dont la puissance est supérieure à 10KW environ.

Dans cette réalisation, le court-circuiteur à impédance variable 11 comprend trois triacs 12 reliés d'une part, directement aux bornes des bobinages 1, 2, 3 et d'autre part, à des selfs ou à un bobinage auxiliaire 13, 14, 15. Ces triacs 12 sont commandés par le régulateur 16 réglé manuellement ou automatiquement au moyen d'un organe de détection 17, comme dans le cas du dispositif selon la figure 7.

L'invention peut également s'appliquer à la régulation de la tension d'une génératrice asynchrone tournant à vitesse fixe ou variable.

Dans la réalisation de la figure 10, comme dans le cas des figures précédentes, des condensateurs $C_1$, $C_2$, $C_3$ sont branchés en série aux bornes d'une génératrice asynchrone.

Ces condensateurs $C_1$, $C_2$, $C_3$ sont branchés en série avec les bobinages 1, 2, 3 d'une génératrice asynchrone. Ces condensateurs $C_1$, $C_2$, $C_3$ compensent l'impédance interne de la génératrice.

Aux bornes des bobinages 1, 2, 3 sont également reliées en parallèle des capacités $C_4$, $C_5$, $C_6$ d'excitation à vide de la génératrice.

Entre ces capacités $C_4$, $C_5$, $C_6$ et les condensateurs $C_1$, $C_2$, $C_3$ est branché en parallèle un court-circuiteur à impédance variable 18 qui comprend, comme dans le cas du dispositif selon la figure 7, un pont redresseur à diodes 19 et une résistance variable 20.

Cette impédance variable 18 peut être commandée manuellement ou être réglée automatiquement par un régulateur asservi à la tension U délivrée par la génératrice asynchrone.

Dans la réalisation de la figure 11, comme précédemment, des condensateurs $C_1$, $C_2$, $C_3$ sont branchés en série avec les bobinages 1, 2, 3 d'un moteur asynchrone triphasé et leur capacité est supérieure à l'inductance des bobinages du moteur.

Dans cet exemple, un thyristor 21 est branché en parallèle aux bornes du bobinage 3 de l'une des phases du moteur. Le thyristor 21, muni d'une gâchette 22 est associé à un circuit électrique connu en lui-même qui permet de régler son "angle" entre 0 et 180°.

Lorsque le thyristor 21 est réglé à l'angle nul, tout se passe comme s'il n'existait pas et le couple (C) du moteur en fonction de la vitesse N, décrit la courbe en trait plein de la figure 12.

Lorsque le thyristor 21 est réglé à l'angle 180°, on supprime complètement une alternance de la tension U qui circule dans le bobinage 3. Dans ce cas, dans ce bobinage 3 circule uniquement la composante continue de cette tension qui crée un champ au rotor du moteur qui s'oppose au champ moteur, comme dans le cas des courants de Foucault.

On crée ainsi un couple négatif, représenté en traits mixtes sur la figure 12. Dans cet exemple, le couple de freinage peut représenter jusqu'à 40% du couple nominal du moteur.

En réglant le thyristor 21 à des angles intermédiaires, par exemple 10°, ou 20°, on ne supprime qu'une partie de l'alternance (voir partie hachurée sur la figure 13) et on obtient des courbes de couple de valeur plus faible (voir courbes en pointillés sur la figure 12) que celle du couple maximum, mais également croissante en fonction de la vitesse N. On comprend donc que le thyristor 21 permet de régler d'une manière très simple et très efficace la vitesse du moteur.

L'efficacité du dispositif selon la figure 11 est plus grande que celle du dispositif précédemment décrit en référence aux figures 7 et 9, bien qu'il introduise un déséquilibre apparent de 20% environ dans le courant de la phase du bobinage 3. Ce déséquilibre reste néanmoins acceptable.

Pour éviter toute nuisance due à des phénomènes transitoires, on peut brancher une petite self de choc 23 en série avec le thyristor 21.

Le thyristor 21 peut être remplacé par un triac. Dans ce cas, on obtient un dispositif de régulation moins puissant, mais qui introduit un déséquilibre magnétique moins important que dans le cas de l'utilisation d'un thyristor.

Dans la réalisation de la figure 14, le court-circuiteur du dispositif est constitué par trois thyristors 24, 25, 26 branchés en parallèle avec les bornes des bobinages 1, 2, 3 correspondant aux trois phases du moteur.

L'effet de ces trois thyristors 24, 25, 26 s'applique ainsi sur les trois phases du moteur. On peut obtenir dans ce cas un couple de ralentissement dépassant de 100% celui du couple maximal.

L'avantage de ce dispositif par rapport au précédent est qu'il est parfaitement équilibré.

Par ailleurs, étant donné l'efficacité accrue obtenue par les trois thyristors, ce dispositif peut s'appliquer à des moteurs dont la puissance dépasse 10KW. En outre, ce dispositif permet d'obtenir un bruit magnétique moindre que celui de la figure 11.

Comme dans le cas du dispositif selon la figure 11, celui de la figure 14 peut comporter une self 27 en série avec les thyristors pour éliminer les nuisances dues aux phénomènes transitoires.

Le dispositif selon l'invention peut s'appliquer également aux moteurs asynchrones monophasés.

La figure 15 illustre le cas d'un moteur monophasé dans lequel les bobinages 1, 2, 3 sont branchés en étoile. Dans cette réalisation, un condensateur $C_1$ est branché en série avec le bobinage 1 et un condensateur $C_2$ est compris entre les bobinages 2 et 3. Ces condensateurs $C_1$ et $C_2$ ont comme précédemment une capacité globale supérieure à l'inductance des bobinages 1, 2, 3.

Dans cette réalisation, un court-circuiteur 28 constitué par une impédance variable est branché en parallèle avec les bornes du bobinage 3. Cette impédance variable peut être remplacée par un pont de diodes 29 en parallèle avec une résistance variable 30 (voir figure 16) ou par un thyristor 31 en série avec un self 32 (voir figure 17).

Dans le cas de la figure 18, le dispositif concerne un moteur monophasé dont les bobinages 1, 2, 3 sont branchés en triangle. Aux bornes du bobinage 3 est branché en parallèle une impédance variable 33.

Dans le cas de la figure 19, le dispositif concerne un moteur monophasé vrai, comprenant deux bobinages 2, 3 et une impédance variable 34 branchée en parallèle avec le bobinage 3.

Dans les réalisations des figures 18, 19, l'impédance variable 33, 34 peut être remplacée par le montage de la figure 16.

L'effet des capacitér $C_1$, $C_2$ et des court-circuiteurs (28), (29, 30), (31, 32), (33, 34) dans les moteurs monophasés est le même que dans le cas des moteurs triphasés.

Dans tous les cas, le dispositif conforme à l'invention, est plus performant que les gradateurs utilisés jusqu'à présent pour régler la vitesse des moteurs asynchrones.

Bien entendu, l'invention n'est pas limitée aux exemples d'application que l'on vient de décrire, et on peut apporter à ceux-ci de nombreuses modifications, sans sortir du cadre de l'invention.

Ainsi, l'invention peut s'appliquer dans tous les cas où on veut modifier le couple d'un moteur asynchrone, alimenté à fréquence variable et à tension fixe, contrôler la vitesse d'un moteur alimenté en fréquence fixe ou variable, ou régler la tension d'une génératrice asynchrone tournant à vitesse fixe ou variable.

**Revendications :**

1. Dispositif électrotechnique de régulation des machines tournantes asynchrones, comprenant des condensateurs ($C_1$, $C_2$, $C_3$) en série avec les bobinages (1, 2, 3) de la machine tournante, la capacité des condensateurs ($C_1$, $C_2$, $C_3$) associés à chacun des bobinages (1, 2, 3) étant telle que le facteur capacitif est supérieur au facteur inductif Lw correspondant au bobinage, caractérisé en ce qu'il comprend un cour-circuiteur (4; 11; 18; 21; 24, 25, 26; 28; 29, 30; 31, 32; 33; 34) à impédance variable branché en parallèle entre l'un au moins des bobinages (1, 2, 3) et le ou les condensateurs ($C_1$, $C_2$, $C_3$) associés.

2. Dispositif conforme à la revendication 1, appliqué à la régulation de vitesse des moteurs asynchrones, caractérisé en ce que le facteur est égal à deux fois environ le facteur Lw.

3. Dispositif conforme à l'une des revendications 1 ou 2, caractérisé en ce que le court-circuiteur (4) comprend un pont redresseur à diodes (5) dont les bornes sont chacune reliées en parallèle à une borne des bobinages (1, 2, 3) par l'intermédiaire d'une self ou un bobinage auxiliaire (6, 7, 8), ce pont à diodes (5) étant relié à une résistance variable (9).

4. Dispositif conforme à l'une des revendications 1 ou 2, caractérisése en ce que le court-circuiteur (11) comprend des triacs (12) reliés aux bornes du bobinage (1, 2, 3), ces triacs étant eux-mêmes reliés à une self ou un bobinage auxiliaire (13, 14, 15).

5. Dispositif conforme à une quelconque des revendications 3 ou 4, caractérisé en ce que l'impédance variable (9, 16) est auto-commandée par un organe de détection (10, 17) en vue d'asservir la vitesse du moteur au paramètre détecté par cet organe.

6. Dispositif conforme à la revendication 1, appliqué à la régulation de la tension des génératrices asynchrones, caractérisé en ce qu'il comprend un court-circuiteur à impédance variable (18) branché entre les condensateurs en série (C₁, C₂, C₃) et les condensateurs d'excitation à vide (C₄, C₅, C₆) reliés en parallèle aux bornes des bobinages (1, 2, 3).

7. dispositif conforme à la revendication 6, caractérisé en ce que le court-circuiteur (18) est un pont redresseur à diodes (19) relié à une résistance variable (20).

8. Dispositif conforme à la revendication 7, caractérisé en ce que l'impédance variable (18) est réglée par un régulateur asservi à la tension U délivrée par la génératrice asynchrone.

9. Dispositif conforme à l'une des revendications 1 ou 2, caractérisé en ce que le court-circuiteur (21) est un thyristor o un triac branché en parallèle aux bornes du bobinage (3) de l'une des phases d'un moteur triphasé.

10. Dispositif conforme à l'une des revendications 1 ou 2, caractérisé en ce que le court-circuiteur (24, 25, 26) est constitué par trois thyristors ou triacs branchés en parallèle aux bornes des bobinages (1), (2), (3) correspondant aux trois phases d'un moteur triphasé.

11. Dispositif conforme à l'une des revendications 9 ou 10, caractérisé en ce qu'une self (23, 27) est branchée en série avec les thyristors.

12. Dispositif conforme à l'une des revendications 1 ou 2, caractérisé en ce que le court-circuiteur (28, 29, 30, 31, 32, 33, 34) est branché en parallèle aux bornes d'un bobinage (3) de moteur monophasé.

**Patentansprüche**

1. Elektrotechnische Vorrichtung zur Regulierung von asynchronen rotierenden Maschinen, mit Kondensatoren (C₁, C₂, C₃) die in Reihe mit den Wicklungen (1, 2, 3) der rotierenden Maschine liegen, wobei die Kapazität der jeweils einer der Wicklungen (1, 2, 3) zugeordneten Kondensatoren (C₁, C₂, C₃) derart ist, daß der kapazitive Faktor größer ist als der induktive Faktor Lw, welcher der Wicklung entspricht, dadurch gekennzeichnet, daß sie ein Kurzschlußglied (4; 11; 18; 21; 24, 25, 26; 28; 29, 30; 31, 32, 33; 34) mit variabler Impedanz umfaßt, welches parallel zwischen wenigstens eine der Wicklungen (1, 2, 3) und den zugeordneten Kondensator bzw. die zugeordneten Kondensatoren (C₁, C₂, C₃) geschaltet ist.

2. Vorrichtung nach Anspruch 1, angewendet au die Geschwindigkeitsregulierung bei Asynchronmotoren, dadurch gekennzeichnet, daß der Faktor

gleich etwa dem Zweifachen des Faktors Lw ist.

3. Vorrichtung nach Anspruch 1 oder 2, dadurch gekennzeichnet, daß das Kurzschlußglied (4) eine Dioden-Gleichrichterbrücke (5) umfaßt, deren Anschlüsse jeweils über eine Drossel oder eine Hilfswicklung (6, 7, 8) parallel an einen Anschluß der Wicklungen (1, 2, 3) angeschlossen sind, wobei diese Diodenbrücke (5) an einen variablen Widerstand (9) angeschlossen ist.

4. Vorrichtung nach einem der Ansprüche 1 und 2, dadurch gekennzeichnet, daß das Kurzschlußglied (11) Triacs (12) umfaßt, welche mit den Anschlüssen der Wicklungen (1, 2, 3) verbunden sind, wobei diese Triacs ihrerseits an eine Drossel oder an eine Hilfswicklung (13, 14, 15) angeschlossen sind.

5. Vorrichtung nach einem der Ansprüche 3 und 4, dadurch gekennzeichnet, daß die variable Impedanz (9, 16) selbsttätig gesteuert ist durch ein Detektororgan (10, 17), um die Motorgeschwindigkeit dem durch dieses Organ erfaßten Parameter nachzuregeln.

6. Vorrichtung nach Anspruch 1, angewendet auf die Regulierung der Spannung von Asynchrongeneratoren, dadurch gekennzeichnet, daß sie ein Kurzschlußglied mit variabler Impedanz (18) umfaßt, welches zwischen die Reihenkondensatoren (C₁, C₂, C₃) und die Leerlauferregungskondensatoren (C₄, C₅, C₆) geschaltet ist, welche parallel an die Wicklungsanschlüsse (1, 2, 3) angeschlossen sind.

7. Vorrichtung nach Anspruch 6, dadurch gekennzeichnet, daß das Kurzschlußglied (18) eine Dioden-Gleichrichterbrücke (19) ist, welche an einen variablen Widerstand (20) angeschlossen ist.

8. Vorrichtung nach Anspruch 7, dadurch gekennzeichnet, daß die variable Impedanz (18) durch einen Regler eingestellt wird, welcher durch die von dem Asynchrongenerator abgegebene Spannung U nachgeführt wird.

9. Vorrichtung nach einem der Ansprüche 1 und 2, dadurch gekennzeichnet, daß das Kurzschlußglied (21) ein Thyristor oder ein Triac ist, welcher parallel zu den Wicklungsanschlüssen (3) einer der Phasen des dreiphasigen Motors geschaltet ist.

10. Vorrichtung nach Anspruch 1 oder 2, dadurch gekennzeichnet, daß das Kurzschlußglied (24, 25, 26) durch drei Thyristoren oder Triacs gebildet ist, die parallel zu den Anschlüssen der Wicklungen (1), (2), (3) geschaltet sind, welche den drei Phasen eines dreiphasigen Motors entsprechen.

11. Vorrichtung nach Anspruch 9 oder 10, dadurch gekennzeichnet, daß eine Drossel (23, 27) in Reihe mit den Thyristoren geschaltet ist.

12. Vorrichtung nach Anspruch 1 oder 2, dadurch gekennzeichnet, daß das Kurzschlußglied (28, 29, 30, 31, 32, 33, 34) parallell zu den Anschlüssen einer Wicklung (3) des einphasigen Motors geschaltet ist.

## Claims

1. Electrotechnical device for regulating asynchronous rotating machines, comprising capacitors ($C_1$, $C_2$, $C_3$) in series with the windings (1, 2, 3) of the rotating machine, the capacitance of the capacitors ($C_1$, $C_2$, $C_3$) associated with each of the windings (1, 2, 3) being such that the coefficient of capacitance

is higher than the coefficient of inductance Lw corresponding to the winding, characterized in that it comprises a variable-impedance short-circuiter (4; 11; 18; 21; 24, 25, 26; 28; 29, 30; 31, 32; 33; 34) connected in parallel between at least one of the windings (1, 2, 3) and the associated capacitor or capacitors ($C_1$, $C_2$, $C_3$).

2. Device in accordance with claim 1 as applied to speed regulation of asynchronous motors, characterized in that the coefficient of capacitance is equal to approximately twice the value of the coefficient of inductance Lw.

3. Device in accordance with either claim 1 or claim 2, characterized in that the short-circuiter (4) comprises a diode bridge rectifier (5), the terminals of which are each connected in parallel to one terminal of the windings (1, 2, 3) through an inductance coil or an auxiliary coil (6, 7, 8), this diode bridge rectifier (5) being connected to a variable resistor (9).

4. Device in accordance with claim 1 or claim 2, characterized in that the short-circuiter (11) comprises triacs (12) connected to the terminals of the winding (1, 2, 3), these triacs being in turn connected to an inductance coil or to an auxiliary coil (13, 14, 15).

5. Device in accordance with either claim 3 or claim 4, characterized in that the variable impedance (9, 16) is self-controlled by a detection device (10, 17) for controlling the speed of the motor in dependence on the parameter detected by this device.

6. Device in accordance with claim 1 as applied to voltage regulation of the asynchronous generators, characterized in that it comprises a variable-impedance short-circuiter (18) connected between the series capacitors ($C_1$, $C_2$, $C_3$) and the no-load excitation capacitors ($C_4$, $C_5$, $C_6$) which are connected in parallel to the terminals of the windings (1, 2, 3).

7. Device in accordance with claim 6, characterized in that the short-circuiter (18) is a diode bridge rectifier (19) connected to a variable resistor (20).

8. Device in accordance with claim 7, characterized in that the variable impedance (18) is adjusted by a regulator controlled in dependence on the voltage U delivered by the asynchronous generator.

9. Device in accordance with either claim 1 or claim 2, characterized in that the short-circuiter (21) is a thyristor or a triac connected in parallel to the terminals of the winding (3) of one of the phases of a three-phase motor.

10. Device in accordance with either claim 1 or claim 2, characterized in that the short-circuiter (24, 25, 26) is constituted by three thyristors or triacs connected in parallel across the terminals of the windings (1), (2), (3) corresponding to the three phases of a three-phase motor.

11. Device in accordance with either claim 9 or claim 10, characterized in that an inductance coil (23, 27) is connected in series with the thyristors.

12. Device in accordance with either claim 1 or claim 2, characterized in that the short-circuiter (28, 29, 30, 31, 32, 33, 34) is connected in parallel across the terminals of one single-phase motor winding (3).

FIG_1

FIG_2

FIG_3

FIG_4

FIG_5

FIG. 6

FIG. 7

FIG.8

FIG.9

FIG. 10

FIG. 11

FIG. 12

FIG. 13

FIG.14

FIG.15

FIG.16

FIG.17

FIG.18

FIG.19